# EUROPÄISCHE PATENTSCHRIFT

(11) **EP 0 596 911 B1**
(45) Veröffentlichungstag und Bekanntmachung des Hinweises auf die Patenterteilung: **10.05.1995**
(21) Anmeldenummer: 92914729.6
(22) Anmeldetag: 09.07.1992
(51) Int. Cl.: B01D 53/34, B01D 53/02, C22B 43/00

(54) **VERFAHREN ZUR REINIGUNG VON STARK MIT QUECKSILBER BELASTETEN RAUCHGASEN**
METHOD OF PURIFYING FLUE GASES CONTAINING HIGH CONCENTRATIONS OF MERCURY
PROCEDEE DE LAVAGE DE GAZ DE FUMEE FORTEMENT CONTAMINES AVEC DU MERCURE

(30) Priorität: 26.07.1991 DE 4124844
(43) Veröffentlichungstag der Anmeldung: 18.05.1994
(73) Patentinhaber: Noell-KRC Umwelttechnik GmbH, 97064 Würzburg (DE)
(72) Erfinder: KÜRZINGER, Karl, D-8702 Helmstadt (DE); MENSING, Andreas, D-8706 Höchberg (DE); THOME, Ernst, D-8706 Höchberg (DE)
(74) Vertreter: Werner, Hans-Karsten, Dr.Dipl.-Chem.
(86) Internationale Anmeldenummer: EP9201557
(87) Internationale Veröffentlichungsnummer: WO9302773

(56) Entgegenhaltungen:
- EP-A- 0 243 664
- EP-A- 0 253 563
- EP-A- 0 278 537
- EP-A- 0 479 350
- WO-A-89/11329
- MÜLL UND ABFALL vol. 23, No. 4, April 1991, BERLIN, DE pages 229-235 VICINUS J. 'Abscheidung von Dioxinen, Furanen und Schwermetallen in einer Gasreinigung'

## Beschreibung

Gegenstand der vorliegenden Erfindung ist ein Verfahren zur Reinigung von stark mit vornehmlich metallischem Quecksilber belasteten Rauchgasen, insbesondere von Rauchgasen aus Klärschlammverbrennungsanlagen, durch eine Vorreinigung und eine vorzugsweise zweistufige nasse Rauchgasentschwefelung, bei der der Schwefel in Form von Rauchgasgips anfällt.

Bei der Rauchgasreinigung von Klärschlammverbrennungsanlagen mittels einer vorzugsweise zweistufigen nassen Rauchgasentschwefelung entsteht ein Gips, der prinzipiell den üblichen Verwertungen zugeführt werden kann. Es hat sich jedoch gezeigt, daß ein derartiger Gips mehrere Milligramm Quecksilber/kg Gips enthalten kann, was die Verwertung erschwert. Um daher eine uneingeschränkte Verwertbarkeit zu sichern, sollte auch der Quecksilbergehalt bei den gleichen geringen Werten liegen wie bei Gips aus Kraftwerksentschwefelungsanlagen.

In Hausmüllverbrennungsanlagen, deren Rauchgase ebenfalls relativ hoch mit Quecksilber belastet sind, findet nach der groben Vorabscheidung der Hauptmenge der Flugasche durch Elektro-Filter eine saure Vorwäsche meist noch unter Einsatz von Chemikalien, wie TMT 15, statt. Hiermit gelingt es, das Quecksilber weitgehend auszuwaschen. Dies ist darauf zurückzuführen, daß in derartigen Rauchgasen das Quecksilber in Form des wasserlöslichen HgCl₂ vorliegt. Die Rauchgase von Klärschlammverbrennungsanlagen hingegen enthalten wegen des geringen HCl-Gehaltes im Rauchgas vor allem metallisches Quecksilber, welches nicht oder nicht vollständig mit einer sauren Vorwäsche entfernt werden kann. Weiterhin ist zu beachten, daß wegen der hohen Sättigungstemperatur des Rauchgases von ca. 70°C dieses Quecksilber nicht in der sauren Vorwäsche kondensierbar ist, so daß es den sauren Vorwäscher praktisch vollständig passiert. So wird dieses metallische Quecksilber überwiegend in der nassen Rauchgasentschwefelung abgeschieden und gelangt so in den Rauchgasgips. Das restliche Quecksilber verbleibt im entschwefelten Rauchgas und muß gegebenenfalls nachträglich durch weitere Maßnahmen entfernt werden.

Versuche, die saure Vorwäsche durch mechanische Maßnahmen, wie ein dichteres Sprühfeld, oder den Einsatz von zusätzlichen Chemikalien zu verbessern, haben zwar zu geringfügigen Verbesserungen geführt, dennoch gelangt der überwiegende Teil des metallischen Quecksilbers in den Rauchgasgips. Bei diesen versuchten zusätzlichen Maßnahmen ist weiterhin zu beachten, daß der zusätzliche Einsatz von Chemikalien neue Probleme im Waschsystem erzeugt und obendrein mit zusätzlichen Kosten verbunden ist.

Die Erfindung hat sich somit die Aufgabe gestellt, ein Verfahren zu entwickeln zur Reinigung von stark mit vornehmlich metallischem Quecksilber belasteten Rauchgasen, insbesondere von Rauchgas aus Klärschlammverbrennungsanlagen, in denen das Quecksilber vornehmlich in metallischer Form anfällt und durch die übliche saure Vorreinigung nicht ausreichend entfernt werden kann. Dabei soll die Rauchgasentschwefelung naß und vorzugsweise zweistufig erfolgen, da auf diesem Wege ein an sich gut verwertbarer Rauchgasgips anfällt. Die Belastung dieses Rauchgasgipses mit Quecksilber soll vermieden werden.

Diese Aufgabe kann in überraschender Weise dadurch gelöst werden, daß die Vorreinigung erfolgt durch Einblasen von feinteiliger Aktivkohle, Aktivkoks, Herdofenkoks oder Molekularsieben als festes Adsorbens in den Rauchgasstrom und Entfernung des beladenen Adsorbens mittels eines Gewebefilters. Das so vorgereinigte Rauchgas wird daraufhin der üblichen nassen Rauchgasentschwefelung unterworfen, wobei ein quecksilberarmer Rauchgasgips ausgeschleust werden kann.

Als besonders vorteilhaft hat es sich erwiesen, vor der Abtrennung des metallischen Quecksilbers mittels feinteiliger Aktivkohle, Aktivkoks, Herdofenkoks oder Molekularsieben aus dem Rauchgasstrom zunächst mittels eines Entstaubungsaggregats mehr als 90 % der Flugasche abzuscheiden. Als Entstaubungsaggregate kommen in Frage vor allem Elektro-Filter, Multizyklone und Zyklon-Wirbler. Es hat sich nämlich gezeigt, daß dabei eine durchaus brauchbare und nicht mit Quecksilber belastete Flugasche entsteht, während das beladene Adsorbens am Gewebefilter praktisch das gesamte metallische Quecksilber enthält. Es entsteht auf diese Weise neben brauchbarer Flugasche nur eine sehr geringe Menge des mit Quecksilber beladenen Adsorbens.

Die Wirksamkeit des Adsorbens kann verbessert werden durch Zusatz von Calciumhydroxid, Kalksteinmehl oder gemahlenem Calciumaluminiumsilicat. Geeignet ist diesbezüglich beispielsweise der gemahlene Abfall von Poroton-Ziegeln.

Ein besonderer Vorteil des erfindungsgemäßen Verfahrens besteht darin, daß sich in dem beladenen Adsorbens nicht nur das metallische Quecksilber anreichert, sondern auch andere unerwünschte Verunreinigungen des Rauchgases, wie Aerosole, Ammoniak und polychlorierte Substanzen, wie PCDD und PCDF. Durch die erfindungsgemäße Vorreinigung gelangen diese Verunreinigungen weder in die Rauchgasentschwefelung noch verbleiben sie im Reingas, so daß insgesamt die Umweltbelastung erheblich gesenkt werden kann.

Da das Adsorptionsvermögen von Aktivkohle, Aktivkoks, Herdofenkoks oder Molekularsieben mit und ohne Zusatz von Calciumhydroxid, Kalksteinmehl oder Calciumaluminiumsilicaten verbessert wird durch niedrige Temperaturen, empfiehlt es sich, das Rauchgas bereits vor der Vorreinigung durch Gas-Gas-Wärmeaustausch mit gereinigtem und entschwefelten Rauchgas abzukühlen. Bei diesem Wärmeaustausch heizt sich das Reingas wieder auf und kann dadurch direkt in den Kamin geleitet werden, den es schwadenfrei verläßt.

Die weitere Untersuchung hat gezeigt, daß auch andere gasförmige Schwermetalle, wie Cadmium, Blei und Zink, dem Rauchgas entzogen werden und in die relativ geringe Menge des beladenen Adsorbens gelangen. Auch die bekannten Störungen der Rauchgasentschwefelung durch Aerosole aus Ammoniumchlorid, Schwefeltrioxid, organischen Reststoffen und gasförmigem Ammoniak werden erfindungsgemäß vermieden. Sofern freies Ammoniak im Rauchgas vorhanden ist, wird dies dadurch adsorbiert, daß sich in den Poren des Adsorptionsmittels aus SO₂, Wasserdampf und Sauerstoff Schwefelsäure bildet, die den Ammoniak in Form von Ammoniumsulfat bindet.

Insbesondere, sofern Calciumhydroxid und/oder Kalksteinmehl dem Adsorptionsmittel zugesetzt werden, binden diese auch die im Rauchgas vorliegenden sauren Bestandteile, wie Chlorwasserstoff und Fluorwasserstoff, so daß diese nur noch in wesentlich geringerem Maße in die Rauchgasentschwefelung gelangen. Günstigstenfalls wird die Konzentration an HCl und HF so gesenkt, daß in der eigentlichen Rauchgasentschwefelung die Werte bis an die Nachweisgrenze reduziert werden. Sofern dennoch HCl in die Rauchgasentschwefelung gelangt, wird es zu Calciumchlorid umgesetzt, welches wasserlöslich ist und daher bei der Waschung des Rauchgasgipses mit Frischwasser ausgewaschen wird. Es entsteht somit ein besonders reiner und hochwertiger Rauchgasgips, den die Gipsindustrie abnimmt.

Insbesondere bei nassen zweistufigen Rauchgasentschwefelungsanlagen der Anmelderin wird der SO₂-Gehalt so stark gesenkt, daß das Reingas extrem niedrige Werte für SO₂ aufweist, nämlich ca. 10 mg/Nm³.

Die Menge an beladenem Adsorbens mit all den oben genannten Verunreinigungen, wie Quecksilber, Schwermetallen, Aerosolen, Organica, etc. ist als Sondermüll einzustufen. Mengenmäßig sind dies aber nur wenige Kilogramm pro Stunde.

Wenn auf die vorherige Abscheidung der Flugasche mittels Elektro-Filter, Multizyklon oder Zyklon-Wirblern verzichtet wird, entsteht ein beladenes Adsorbens, bestehend aus Flugasche und der zusätzlich eingegebenen Menge an Adsorbens. Es entsteht somit eine größere Menge an Sonderabfall, jedoch sind auch bei dieser Variante schon vergleichbare Ergebnisse der Rauchgasreinigung einerseits und der Erzeugung eines quecksilberarmen Rauchgasgipses andererseits zu beobachten.

Wenn eine abwasserfrei arbeitende Rauchgasreinigung gefordert wird, kann das System um einen Sprühtrockner oder eine Eindampfanlage ergänzt werden, in der das Filtrat aus der Gipsentwässerung zum Trocknen eingedampft wird. Der Sprühtrockner wird bevorzugt auf der heißen Rauchgasseite vor den Rauchgas-Wärmetauscher (Gas-Gas-Wärmetauscher) geschaltet. Eine Eindampfanlage bietet sich an, wenn Dampf im Überschuß vorhanden ist.

Gewünschtenfalls kann auch die gesamte aus dem zweistufigen Wäscher ausgeschleuste Suspension mit Hilfe der heißen Rauchgase getrocknet bzw. in der Eindampfanlage zum Trocknen eingedampft oder sogar zu abbindefähigen wasserärmeren Stufen des Calciumsulfats calciniert werden.

## Patentansprüche

1. Verfahren zur Reinigung von stark mit vornehmlich metallischem Quecksilber belasteten Rauchgasen, insbesondere von Rauchgasen aus Klärschlammverbrennungsanlagen, durch eine Vorreinigung und eine vorzugsweise zweistufige nasse Rauchgasentschwefelung, bei der der Schwefel in Form von Rauchgasgips anfällt, dadurch gekennzeichnet, daß die Vorreinigung erfolgt durch Einblasen von feinteiliger Aktivkohle, Aktivkoks, Herdofenkoks oder Molekularsieben als festes Adsorbens in den Rauchgasstrom und Entfernung des beladenen Adsorbens mittels eines Gewebefilters, woraufhin die übliche nasse Rauchgasentschwefelung und die Ausschleusung des Rauchgasgipses erfolgt.

2. Verfahren gemäß Anspruch 1, dadurch gekennzeichnet, daß aus dem Rauchgasstrom zunächst mittels eines Entstaubungsaggregats mehr als 90 % der Flugasche abgeschieden wird.

3. Verfahren gemäß Anspruch 1 oder 2, dadurch gekennzeichnet, daß dem Adsorbens zusätzlich Calciumhydroxid, Kalksteinmehl oder gemahlene Calciumaluminiumsilicate zugemischt werden.

4. Verfahren gemäß einem der Ansprüche 1 bis 3, dadurch gekennzeichnet, daß das Rauchgas bereits vor der Vorreinigung durch Gas-Gas-Wärmeaustausch mit gereinigtem und entschwefelten Rauchgas abgekühlt wird, wobei sich dieses wieder aufheizt.

## Claims

1. A process for the purification of flue gases which are highly polluted with mercury, chiefly mercury metal, in particular, of flue gases from sewage sludge incineration plants, by means of a prepurification and a preferably two-stage wet flue gas desulfurization, wherein sulfur is recovered in the form of flue gas gypsum, characterized in that the prepurification is effected by blowing finely divided activated carbon, activated coke, hearth furnace coke, or molecular sieves as solid a adsorbent into the flue gas stream and removing the loaded adsorbent by means of a fabric filter, followed by conventional wet flue gas desulfurization and removal of the flue gas gypsum.

2. The process according to claim 1, characterized in that initially more than 90% of the fly ash is removed from the flue gas stream by means of a dust removal apparatus.

3. The process according to claim 1 or 2, characterized in that the adsorbent is additionally admixed with calcium hydroxide, limestone powder or ground calcium aluminum silicates.

4. The process according to anyone of claims 1 to 3, characterized in that the flue gas is cooled by gas/gas heat exchange already prior to prepurification by means of purified and desulfurized flue gas, wherein the latter is heated up again.

## Revendications

1. Procédé de purification de gaz de fumée fortement chargés de mercure essentiellement métallique, en particulier de gaz de fumée provenant d'usines d'incinération de boues d'épuration, par purification préalable et désulfuration des gaz de fumée par voie humide, de préférence en deux étapes, désulfuration dans laquelle le soufre est extrait sous forme de sulfate de calcium de désulfuration de fumée,
caractérisé en ce qu'on effectue la purification préalable en injectant, dans le flux de gaz de fumée, du charbon actif finement divisé, du coke actif, du coke de four à sole ou des tamis moléculaires, concernant un adsorbant solide, et on sépare l'adsorbant chargé au moyen d'un filtre en tissu, après quoi on effectue la désulfuration usuelle des gaz de fumée, par voie humide, et l'évacuation du sulfate de calcium de désulfuration de fumée.

2. Procédé selon la revendication 1, caractérisé en ce qu'on sépare d'abord, du flux de gaz de fumée, plus de 90 % des cendres volantes au moyen d'un ensemble de dépoussiérage.

3. Procédé selon la revendication 1 ou 2, caractérisé en ce qu'on ajoute à l'adsorbant, en outre, de l'hydroxyde de calcium, une mouture de pierre à chaux ou des aluminosilicates de calcium broyés.

4. Procédé selon l'une des revendications 1 à 3, caractérisé en ce que le gaz de fumée est refroidi déjà avant la purification préalable, grâce à un échange de chaleur du type gaz-gaz, avec du gaz de fumée purifié et désulfuré, pendant lequel celui-ci se réchauffe.
